# EUROPÄISCHE PATENTSCHRIFT

(11) **EP 2 703 448 B1**
(45) Veröffentlichungstag und Bekanntmachung des Hinweises auf die Patenterteilung: **14.01.2015**
(21) Anmeldenummer: 12182188.8
(22) Anmeldetag: 29.08.2012
(51) Int. Cl.: C08L 77/00, C08K 5/092

(54) **Verfahren zur Minderung des Eigengeruchs Polyamid-basierter Formteile**
Method for reducing the natural aroma of polyamide-based moulded parts
Procédé de réduction de l'odeur propre de pièces de formage à base de polyamide

(43) Veröffentlichungstag der Anmeldung: 05.03.2014
(73) Patentinhaber: LANXESS Deutschland GmbH, 50569 Köln (DE)
(72) Erfinder: Schmidt, Holger, Dr., 41541 Dormagen (DE); Joachimi, Detlev, Dr., 47800 Krefeld (DE)

(56) Entgegenhaltungen:
- EP-A2- 0 936 237
- US-A- 4 757 099
- US-A- 4 873 286
- US-A- 5 017 656
- US-A1- 2012 029 129

## Beschreibung

Die vorliegende Erfindung betrifft ein Verfahren zur Minderung des Eigengeruchs von Formteilen aus Polyamid-Formmassen mittels Zitronensäure durch Zusatz zur Formmasse oder durch äußerliche Einwirkung auf das Formteil.

Formmassen auf Basis von Polyamiden können aufgrund ihrer chemischen Zusammensetzung und durch Nebenreaktionen beim Verarbeiten in der Schmelze Spuren an flüchtigen, den Geruch beeinträchtigenden Verbindungen enthalten, die nach der Verarbeitung vom fertigen Teil emittiert werden können. Dies kann in geschlossenen Räumen, insbesondere im PKW-Innenraum zu unerwünschten Geruchswahrnehmungen führen. Insbesondere bei der Aufnahme von Feuchtigkeit können Spuren an flüchtigen Verbindungen aus Polyamidformmassen in die Atmosphäre austreten und ein Geruchsempfinden auslösen. Dies tritt insbesondere in Erscheinung bei der Einwirkung von Feuchtigkeit auf Formteile aus Polyamid (Konditionierung), die zur Verbesserung der mechanischen Eigenschaften von Formteilen durchgeführt wird. Sowohl bei der Konditionierung als auch beim regulären Gebrauch von Formteilen aus Polyamid-Zusammensetzungen ist jedoch Neutralität bezüglich des Geruchs erforderlich.

US-A 5122407 beschreibt den Einsatz von Zitronensäure als Geruchshemmer in Flüssigkeit absorbierenden Artikeln zur Körperhygiene. Dafür wird das zu behandelnde Faser-Fliess mit einer Zitronensäure enthaltenden Lösung behandelt und mittels Heißluft getrocknet.

JP 04174765 A stellt Geruchs hemmende Polyamidfasern vor, die mit einer Zitronensäure enthaltenden Lösung präpariert und bei 160 °C nachbehandelt werden. Die Fasern behalten ihre deodorierende Wirkung auch nach der Wäsche.

JP 01236056 A lehrt, dass deodorierende Nylonfasern in Luftreinigern mit Zitronensäure ausgerüstet werden können und dadurch eine erhöhte Bindefähigkeit gegenüber Gerüchen aus der Raumluft erhalten.

WO 2003051413 A1 führt aus, dass Naturfasern wie Cellulose mit Zitronensäure, Chitosan und einem Silikonbinder behandelt als Absorbermaterial zur Entfernung von Gerüchen aus Luft verwendet werden können.

JP 2007135979 A beschreibt Geruchs bindende Zusätze für Feuchtigkeitsabsorber in der Körperhygiene, die Zitronensäure enthalten und besonders gegenüber Ammoniak-Gerüchen eine gute deodorierende Wirkung zeigen.

Die im Stand der Technik beschriebenen Verfahren zur Geruchsbindung mit Zitronensäure lehren bislang jedoch keine Maßnahmen, um den Eigengeruch von spritzgegossenen Formteilen aus Polyamid-Formmassen zu mindern, der insbesondere beim Einwirken von Feuchtigkeit auf Polyamid-Formteile auftritt.

Daher bestand die Aufgabe, ein Verfahren zur Minderung des Eigengeruchs von Formteilen auf Basis von Polyamid-Zusammensetzungen zu entwickeln. Dieses Verfahren kann sowohl die Zusammensetzung der dem Formteil zugrunde liegenden Formmasse betreffen, als auch am fertigen Formteil anzuwendende Nachbehandlungsschritte umfassen.

Es wurde nunmehr gefunden, dass der Eigengeruch von Formteilen aus Formmassen auf Basis von Polyamiden durch Einwirkung von Zitronensäure zur Polyamid-Formmasse deutlich gemindert werden kann. Die Zitronensäure kann dabei sowohl der Formmasse, aus der das Teil gefertigt ist, als Inhaltsstoff zugesetzt sein, als auch äußerlich auf das fertige Teil einwirken.

Gegenstand der Erfindung ist daher ein Verfahren zur Minderung des Eigengeruches von Formteilen aus Polyamid-Formmassen durch Zitronensäure als Zusatz zur Formmasse oder durch äußerliche Einwirkung von Zitronensäure auf das Formteil.

Die vorliegende Erfindung betrifft ferner die Verwendung von Zitronensäure zur Reduktion des Eigengeruches von Formteilen auf Basis von Polyamid-Formmassen sowie zur Reduktion der Eigengeruchsbildung bei der Behandlung von Formteilen auf Basis von Polyamid-Formmassen mit Feuchtigkeit (Konditionierung), insbesondere dann, wenn diese mit Feuchtigkeit zur Verbesserung der mechanischen Eigenschaften oder zur Herstellung von Polyamid-basierten Formteilen zur Anwendung in Kontakt mit Wasser enthaltenden Lebensmitteln oder Trinkwasser kommen.

Der Gehalt an Zitronensäure als Zusatz in der Formmasse beträgt bevorzugt 0,001 bis 10 Gew.-% bezogen auf das Gewicht der Gesamtformmasse. Besonders bevorzugt werden 0,01 bis 5 Gew.-%, ganz besonders bevorzugt 0,1 bis 3 Gew.-% Zitronensäure in Bezug auf das Gewicht der Gesamtformmasse eingesetzt, wobei die Formmasse 50 bis 99,999 Gew.-% Polyamid enthält und die Summe aller Komponenten einer erfindungsgemäßen Formmasse stets 100 Gew.-% ergibt.

Gegenstand der Erfindung sind deshalb auch Formmassen enthaltend
A) 50 bis 99,999 Gew.-% Polyamid und
B) 0,001 bis 10 Gew.-% , bevorzugt 0,01 bis 5 Gew.-% , besonders bevorzugt 0,1 bis 3 Gew.- % Zitronensäure bezogen auf das Gewicht der Gesamtformmasse wobei die Summe aller Komponenten einer erfindungsgemäßen Formmasse stets 100 Gew.-% ergibt..

Die Erfindung betrifft deshalb bevorzugt auch die obengenannte Verwendung, wobei in den Formmassen auf A) 50 bis 99,999 Gew.-% Polyamid B) 0,001 bis 10 Gew.-%, bevorzugt 0,01 bis 5 Gew.-%, besonders bevorzugt 0,1 bis 3 Gew.-% Zitronensäure bezogen auf das Gewicht der Gesamtformmasse eingesetzt werden wobei die Summe aller Komponenten einer erfindungsgemäßen Formmasse stets 100 Gew.-% ergibt.

Als Komponente A) enthalten die erfindungsgemäßen thermoplastischen Formmassen bzw. die erfindungsgemäß zu behandelnden Formmassen mindestens ein thermoplastisches Polyamid. Besonders bevorzugt eignen sich sowohl Polyamid 6 als auch Polyamid 66 mit relativen Lösungsviskositäten in m-Kresol von 2,0 bis 4,0, insbesondere bevorzugt Polyamid 6 mit einer relativen Lösungsviskosität in m-Kresol von 2,3 - 3,2. Auch Blends aus Polyamid 6, Polyamid 66, Polyamid 46, Polyamid 12 oder Copolyamiden sind einsetzbar. Darüber hinaus können die erfindungsgemäßen thermoplastischen Formmassen auch Blends aus den beschriebenen Polyamiden und weiteren thermoplastischen Polymeren wie Polyphenylenoxid, Polyethylen oder Polypropylen enthalten.

Die erfindungsgemäß mit Zitronensäure zu behandelnden bzw. in den thermoplastischen Formmassen einzusetzenden Polyamide können nach verschiedenen Verfahren hergestellt werden und aus unterschiedlichen Bausteinen synthetisiert werden. Zur Herstellung von Polyamiden sind eine Vielzahl von Verfahrensweisen bekannt, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden verlaufen meist über die Polykondensation in der Schmelze. In diesem Rahmen wird auch die hydrolytische Polymerisation von Lactamen als Polykondensation verstanden.

Erfindungsgemäß bevorzugte Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können. Als Edukte kommen bevorzugt aliphatische und/oder aromatische Dicarbonsäuren, besonders bevorzugt Adipinsäure, 2,2,4-Trimethyladipinsäure, 2,4,4-Trimethyladipinsäure, Azelainsäure, Sebazinsäure, Isophthalsäure, Terephthalsäure, aliphatische und/oder aromatische Diamine, besonders bevorzugt Tetramethylendiamin, Hexamethylendiamin, 1,9-Nonandiamin, 2,2,4- und 2,4,4-Trimethylhexamethylendiamin, die Isomeren Diaminodicyclohexylmethane, Diaminodicyclohexylpropane, Bis-aminomethyl-cyclohexan, Phenylendiamine, Xylylendiamine, Aminocarbonsäuren, insbesondere Aminocapronsäure, oder die entsprechenden Lactame in Betracht. Copolyamide aus mehreren der genannten Monomeren sind eingeschlossen.

Besonders bevorzugt werden Caprolactame, ganz besonders bevorzugt wird ε-Caprolactam zur Herstellung der erfindungsgemäß mit Zitronensäure zu behandelnden Polyamid-basierten Formmassen eingesetzt.

Insbesondere besonders bevorzugt mit Zitronensäure zu behandelnde Polyamid-basierten Formmassen sind weiterhin die meisten auf PA6, PA66 und andere auf aliphatischen oder/und aromatischen Polyamiden bzw. Copolyamiden basierenden Compounds, bei denen auf eine Polyamidgruppe in der Polymerkette 3 bis 11 Methylengruppen kommen.

Als Komponente B) enthalten die erfindungsgemäßen bzw. die erfindungsgemäß zu behandelnden Formmassen 0,001 bis 10 Gew.-% , bevorzugt 0,01 bis 5 Gew.-% , besonders bevorzugt 0,1 bis 3 Gew.-% Zitronensäure bezogen auf das Gewicht der Gesamtformmasse.

In einer bevorzugten Ausführungsform enthalten die erfindungsgemäßen bzw. erfindungsgemäß mit Zitronensäure zu behandelnden Formmassen als Komponente C) 0,001 bis 60 Gew.-% Glasfasern, bevorzugt 0,01 bis 55 Gew%, Glasfasern, besonders bevorzugt 0,1 bis 50 Gew% Glasfasern.

In einer bevorzugten Ausführungsform können die erfindungsgemäßen Formmassen bzw. die erfindungsgemäß mit Zitronensäure zu behandelnden Formmassen zusätzlich zu den Komponenten A), B) und gegebenenfalls C), oder anstelle von C) noch
D) 0,01 bis 10,0 Gew.%, bevorzugt 0,1 bis 5,0 Gew.% weitere Additive enthalten.

Weitere Additive der Komponente D) sind bevorzugt Stabilisatoren, besonders bevorzugt UV-Stabilisatoren, Thermostabilisatoren, Gammastrahlenstabilisatoren, Hydrolysestabilisatoren, sowie Antistatika, Emulgatoren, Nukleierungsmittel, Weichmacher, Verarbeitungshilfsmittel, Schlagzähmodifikatoren, Gleitmittel, Entformungsmittel, Antiblocking-Additive, Farbstoffe oder Pigmente. Die genannten und weitere geeignete Additive sind zum Beispiel beschrieben im Plastics Additives Handbook, 5th Edition, Hanser-Verlag, München, 2001, Seiten 80-84, 546-547, 688, 872-874, 938, 966. Die Additive können alleine oder in Mischung bzw. in Form von Masterbatchen eingesetzt werden.

Erfindungsgemäß als Komponente D) bevorzugt einzusetzende Stabilisatoren sind sterisch gehinderte Phenole und/oder Phosphite, Hydrochinone, aromatische sekundäre Amine wie Diphenylamine, substituierte Resorcine, Salicylate, Benzotriazole und Benzophenone, sowie verschieden substituierte Vertreter dieser Gruppen und/oder deren Mischungen.

Erfindungsgemäß als Komponente D) einzusetzende UV-Stabilisatoren sind bevorzugt solche der Reihe verschieden substituierter Resorcine, Salicylate, Benzotriazole oder Benzophenone.

Erfindungsgemäß als Komponente D) bevorzugt einzusetzende Schlagzähmodifikatoren, auch als Elastomermodifikatoren bezeichnet, sind allgemein Copolymerisate, die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acrylsäureester bzw. Methacrylsäureester mit 1 bis 18 C-Atomen in der Alkoholkomponente. Die Copolymerisate weisen bevorzugt kompatibilisierende Gruppen, insbesondere Maleinsaeureanhydrid oder Epoxid, auf.

Erfindungsgemäß als Komponente D) bevorzugte Farbstoffe oder Pigmente können anorganische Pigmente, besonders bevorzugt Titandioxid, Ultramarinblau, Eisenoxid, Zinksulfid oder Russ, sowie organische Pigmente, besonders bevorzugt Phthalocyanine, Chinacridone, Perylene sowie Farbstoffe, insbesondere Nigrosin und Anthrachinone als Farbmittel sowie andere Farbmittel sein.

Erfmdungsgemäß als Komponente D) bevorzugte Nukleierungsmittel sind Natrium- oder Calciumphenylphosphinat, Aluminiumoxid oder Siliziumdioxid oder Talkum, insbesondere bevorzugt Talkum.

Erfindungsgemäß als Komponente D) bevorzugt einzusetzende Gleit und/oder Entformungsmittel sind langkettige Fettsäuren, insbesondere Stearinsäure, Salze langkettiger Fettsäuren insbesondere Ca- oder Zn-Stearat, sowie Esterderivate der Fettsäuren oder Amidderivate der Fettsäuren, insbesondere Ethylen-bis-stearylamid, Montanwachse, insbesondere Ester von Montansäuren mit Ethylenglycol, sowie niedermolekulare Polyethylen- bzw. Polypropylenwachse. Erfindungsgemäß besonders bevorzugte Gleit- und/oder Entformungsmittel sind aus der Gruppe der Ester oder Amide gesättigter oder ungesättigter aliphatischer Carbonsäuren mit 8 bis 40 C-Atomen mit aliphatischen gesättigten Alkoholen oder Aminen mit 2 bis 40 C-Atomen enthalten.

Erfindungsgemäß wird die Zitronensäure in die Polyamid-basierte Formmasse im oben angegebenen Verhältnis vermischt und eingearbeitet. Dies geschieht durch Vermischen der Zitronensäure mit den übrigen Komponenten in den entsprechenden Gewichtsanteilen. Vorzugsweise geschieht das Mischen der Zitronensäure mit den übrigen Komponenten bei Temperaturen von 220 bis 330 °C durch gemeinsames Vermengen, Vermischen, Kneten, Extrudieren oder Verwalzen der Komponenten. Es kann vorteilhaft sein, die Zitronensäure mit einzelnen Komponenten vorzumischen. Es kann weiterhin vorteilhaft sein, Formteile oder Halbzeuge aus einer bei Raumtemperatur (bevorzugt 0 bis 40 °C) hergestellten physikalischen Mischung (Dryblend) der Zitronensäure mit vorgemischten Komponenten und/oder der Zitronensäure mit einzelnen Komponenten direkt herzustellen.

In einer weiteren Ausführungsform der vorliegenden Erfindung wird der Geruch von Formkörpern auf Basis von Polyamid-Formmassen durch äußerliche Einwirkung von Zitronensäure gemindert. Dazu werden 0,001 bis 20 gew.%ige, bevorzugt 0,01 bis 10 gew.%ige, besonders bevorzugt 0,1 bis 5 gew.%ige Lösungen von Zitronensäure in Wasser angefertigt und derartige wässrige Lösungen der Zitronensäure mit den Formteilen aus Polyamid in Kontakt gebracht. Dieses kann durch Eintauchen, Besprühen, Bestreichen, oder in sonstiger Weise durch Benetzen der Formteile mit der Zitronensäurelösung erfolgen. Die Benetzung wird bevorzugt bei Temperaturen zwischen 0 und 210 °C, bevorzugt zwischen 10 und 100 °C, besonders bevorzugt zwischen 15 und 60 °C durchgeführt. Die Zitronensäurelösung lässt man bevorzugt zwischen 1 Sekunde bis 14 Tagen, besonders bevorzugt zwischen 1 Minute und 7 Tagen, ganz besonders bevorzugt zwischen 1 Stunde und 28 Stunden auf die Formteile einwirken. In einer besonders bevorzugten Ausführungsform werden die mit Zitronensäurelösung benetzten Formteile zur Konditionierung in einer feuchtigkeitsdichten Hülle, bevorzugt in einer feuchtigkeitsdichten Hülle aus Polyethylenfolie, eingeschlossen.

Gegenstand der vorliegenden Anmeldung ist auch die Verwendung der erfindungsgemäßen thermoplastischen Formmassen bzw. der erfindungsgemäß zu behandelnden Formmassen in Extrusions-, Profil-Extrusions- oder Blasformverfahren oder im Spritzguss zur Herstellung von Folien, Profilen oder Formteilen.

Erfindungsgemäße Verfahren zur Herstellung von Formteilen durch Extrusion, Profil-Extrusion, Blasformen oder Spritzguss arbeiten bei Schmelzetemperaturen im Bereich von 230 bis 330°C, bevorzugt von 250 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Profile im Sinne der vorliegenden Erfindung sind Erzeugnisse, die über ihre gesamte Länge einen identischen Querschnitt aufweisen. Sie können im Profil-Extrusionsverfahren hergestellt werden. Die grundsätzlichen Verfahrensschritte des Profil-Extrusionsverfahrens sind:
1. Plastifizieren und Bereitstellen der thermoplastischen Schmelze in einem Extruder,
2. Extrusion des thermoplastischen Schmelzestrangs durch eine Kalibrierhülse, die den Querschnitt des zu extrudierenden Profils aufweist,
3. Abkühlung des extrudierten Profils in einem Kalibriertisch,
4. Weitertransport des Profils mit einem Abzug hinter dem Kalibriertisch,
5. Ablängen des zuvor endlosen Profils in einer Schneideanlage,
6. Sammeln der abgelängten Profile an einem Sammeltisch.

Eine Beschreibung der Profilextrusion von Polyamid 6 und Polyamid 66 erfolgt in Kunststoff-Handbuch 3/4, Polyamide, Carl Hanser Verlag, München 1998, Seite 374-384.

Blasformverfahren im Sinne der vorliegenden Erfindung sind bevorzugt Standard-Extrusionsblasformen, 3D-Extrusionsblasformen, Saugblasformverfahren und die sequentielle Coextrusion.

Die grundsätzlichen Verfahrensschritte des Standard-Extrusionsblasformens sind gemäß (Thielen, Hartwig, Gust, "Blasformen von Kunststoffhohlkörpern", Carl Hanser Verlag, München 2006, Seiten 15 bis 17):
1. Plastifizieren und Bereitstellen der thermoplastischen Schmelze in einem Extruder,
2. Umlenken der Schmelze in eine senkrechte Fließbewegung nach unten und das Ausformen eines schlauchförmigen Schmelze-"Vorformlings",
3. Umschließen des frei unter dem Kopf hängenden Vorformlings durch eine in der Regel aus zwei Halbschalen bestehenden Form, dem Blasformwerkzeug,
4. Einschieben eines Blasdorns oder einer (ggf. mehrerer) Blasnadel(n),
5. Aufblasen des plastischen Vorformlings gegen die gekühlte Wand des Blasformwerkzeugs, wo der Kunststoff abkühlt, erhärtet und die endgültige Form des Formteils annimmt,
6. Öffnen der Form und Entformen des blasgeformten Teils,
7. Entfernen der abgequetschten "Butzen"-Abfälle" an beiden Enden des Blasformteils.

Weitere Schritte der Nachbearbeitung können folgen.

Mittels Standard-Extrusionsblasformen lassen sich auch Erzeugnisse mit komplexer Geometrie und mehrachsigen Krümmungen herstellen. Allerdings werden dann Formteile erhalten, die einen großen Anteil von überschüssigem, abgequetschtem Material enthalten und in großen Bereichen eine Schweißnaht aufweisen.

Beim 3D-Extrusionsblasformen, auch als 3D-Blasformen bezeichnet, wird daher zur Vermeidung von Schweißnähten und zur Reduktion des Materialeinsatzes ein in seinem Durchmesser auf den Artikelquerschnitt angepasster Vorformling mit speziellen Vorrichtungen deformiert und manipuliert und dann direkt in die Blasformkavität eingebracht. Die verbleibende Quetschkante wird somit auf ein Minimum an den Artikelenden reduziert (Thielen, Hartwig, Gust, "Blasformen von Kunststoffhohlkörpem", Carl Hanser Verlag, München 2006, Seite 117-122).

Beim Saugblasformverfahren, auch als Saugblasen bezeichnet, wird der Vorformling direkt aus der Düse des Schlauchkopfes in die geschlossene Blasform gefördert und über einen Luftstrom durch die Blasform hindurch"gesaugt". Nach Austritt des unteren Endes des Vorformlings aus der Blasform wird dieser durch Schließelemente oben und unten abgequetscht, und der Aufblas- und Kühlvorgang schließen sich an (Thielen, Hartwig, Gust, "Blasformen von Kunststoffhohlkörpern", Carl Hanser Verlag, München 2006, Seite 123).

Bei der sequentiellen Coextrusion werden zwei unterschiedliche Materialien in alternierender Folge hintereinander ausgestoßen. Auf diese Weise entsteht ein Vorformling mit in Extrusionsrichtung abschnittsweise unterschiedlicher Materialzusammensetzung. Es können bestimmte Artikelabschnitte durch entsprechende Materialauswahl mit spezifisch erforderlichen Eigenschaften ausgestattet werden, beispielsweise für Artikel mit weichen Enden und hartem Mittelteil oder integrierten weichen Faltenbalg-Bereichen (Thielen, Hartwig, Gust, "Blasformen von Kunststoffhohlkörpern", Carl Hanser Verlag, München 2006, Seite 127-129).

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt.

### Man unterscheidet

1. Plastifizieren / Aufschmelzen
2. Einspritzphase (Füllvorgang)
3. Nachdruckphase (wegen thermischer Kontraktion bei der Kristallisation)
4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Bauteil gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion ein endlos geformter Kunststoffstrang, hier ein Polyamid, im Extruder eingesetzt, wobei der Extruder eine Maschine zur Herstellung thermoplastischer Formstücke ist. Man unterscheidet

Einschneckenextruder und Doppelschneckenextruder sowie die jeweiligen Untergruppen konventioneller Einschneckenextruder, förderwirksamer Einschneckenextruder, gegenläufiger Doppelschneckenextruder und gleichläufiger Doppelschneckenextruder.

Extrusionsanlagen bestehen aus Extruder, Werkzeug, Nachfolgeeinrichtung, Extrusionsblasformen. Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Die vorliegende Erfindung betrifft folglich auch Formteile erhältlich durch Extrusion, Profil-Extrusion, Blasformen, besonders bevorzugt Standard-Extrusionsblasformen, 3D-Extrusionsblasformverfahren, Saugblasformverfahren und Sequentielle Coextrusion oder Spritzguss der erfindungsgemäßen Formmassen.

Die vorliegende Erfindung betrifft aber auch die Verwendung der erfindungsgemäßen Formteile oder der erfindungsgemäß zu behandelnden Formteile in der Kraftfahrzeug-, Elektro-, Elektronik-, Telekommunikations-, Computerindustrie, im Sport, in der Medizin, im Haushalt, in der Bau- oder in der Unterhaltungsindustrie.

### Beispiele

Zum Nachweis der erfindungemäß beschriebenen Verbesserungen wurden zunächst durch Compoundierung entsprechende Kunststoff-Formmassen angefertigt. Die einzelnen Komponenten wurden in einem Zweiwellenextruder des Typs ZSK 32 Compounder der Firma Coperion Werner & Pfleiderer (Stuttgart, Deutschland) bei Temperaturen zwischen 260 und 290°C gemischt, als Strang in ein Wasserbad ausgetragen, bis zur Granulierfähigkeit abgekühlt und granuliert. Nach dem Trocknen (in der Regel zwei Tage bei 70°C im Vakuumtrockenschrank) erfolgte die Verarbeitung des Granulates durch Spritzgießen von Probekörpern, z.B. 80 mm x 10 mm x 4 mm. Die Teile wurden in einem Polyethylenbeutel mit Wasser bzw. 3 gew.%iger wässriger Zitronensäurelösung bezogen auf die Masse der Teile besprüht und der Beutel feuchtigkeitsdicht verschlossen. Bei 23 °C konditionierten die Teile für 24 Stunden, danach wurden die Beutel geöffnet und der Geruch innerhalb des Beutels geprüft..

Die folgenden Zusammensetzungen wurden nach der oben beschriebenen Weise verarbeitet und geprüft.

**Tabelle 1: Ausführungsbeispiele der erfindungsgemäßen Formmassen**

| In der folgenden Tabelle sind die Mengen der Einsatzstoffe in Gew.-% angegeben. | | | |
|---|---|---|---|
| ***Polyamidzusammensetzung:*** | **Beispiel 1** | **Beispiel 2** | **Beispiel 3** |
| Polyamid 66 (%) | 69,85 | 69,55 | 69,85 |
| Glasfasern (%) | 30 | 30 | 30 |
| Wachs (%) | 0,15 | 0,15 | 0,15 |
| Zitronensäure (%) | 0 | 0,3 | 0 |

| ***Konditionierungslösung:*** | | | |
|---|---|---|---|
| Zitronensäure (%) | 0 | 0 | 3 |
| Wasser (%) | 100 | 100 | 97 |
| ***Bewertung des Geruchs:*** | stechend | schwach | schwach |

Die Beispiele 2 und 3 zeigen, dass Zitronensäure die Geruchsbildung bei der Feuchtekonditionierung der Polyamid-basierten Probekörper sowohl durch Einbringen in die Formmasse als auch durch Zugabe zum aufgesprühten Wasser bei der Konditionierung wirksam unterbindet.

### Verwendete Materialien

Polyamid 66, linear, mit einer relativen Lösungsviskösität einer 1%igen Lösung in m-Kresol von 3,9 von Lanxess Deutschland GmbH
Glasfasern z.B. CS7928 von Lanxess Deutschland GmbH
Wachs z.B. Licowax E von Clariant
Zitronensäure wasserfrei von Aldrich

## Patentansprüche

1. Verfahren zur Minderung des Eigengeruchs von Formteilen aus Polyamid-Formmassen mit Zitronensäure durch Zusatz zur Formmasse oder durch äußerliche Einwirkung auf das Formteil.

2. Verfahren gemäß Anspruch 1, **dadurch gekennzeichnet, dass** zur äußerlichen Einwirkung 0,001 bis 20 gew.%ige, bevorzugt 0,01 bis 10 gew.%ige, besonders bevorzugt 0,1 bis 5 gew.%ige Lösungen von Zitronensäure in Wasser angefertigt und derartige wässrige Lösungen der Zitronensäure mit den Formteilen aus Polyamid in Kontakt gebracht werden.

3. Verfahren gemäß Anspruch 2, **dadurch gekennzeichnet, dass** die Formteile in die Zitronensäurelösung eingetaucht, mit dieser besprüht, bestrichen, oder in sonstiger Weise benetzt werden.

4. Verfahren gemäß Anspruch 3, **dadurch gekennzeichnet, dass** das Besprühen, das Bestreichen oder die Benetzung bei Temperaturen zwischen 0 und 210 °C, bevorzugt zwischen 10 und 100 °C, besonders bevorzugt zwischen 15 und 60 °C durchgeführt wird.

5. Verfahren gemäß Anspruch 4, **dadurch gekennzeichnet, dass** man die Zitronensäurelösung zwischen 1 Sekunde bis 14 Tagen, bevorzugt zwischen 1 Minute und 7 Tagen, besonders bevorzugt zwischen 1 Stunde und 28 Stunden auf die Formteile einwirken lässt.

6. Verfahren gemäß der Ansprüche 2 bis 5, **dadurch gekennzeichnet, dass** man die zur äußerlichen Einwirkung mit Zitronensäurelösung benetzten Formteile zur Konditionierung in einer feuchtigkeitsdichten Hülle, bevorzugt in einer feuchtigkeitsdichten Hülle aus Polyethylenfolie, einschließt.

7. Verfahren gemäß Anspruch 1, **dadurch gekennzeichnet, dass** man die Zitronensäure mit den übrigen Komponenten in den entsprechenden Gewichtsanteilen vermischt, vorzugsweise durch Mischen der Zitronensäure mit den übrigen Komponenten bei Temperaturen von 220 bis 330 °C durch gemeinsames Vermengen, Vermischen, Kneten, Extrudieren oder Verwalzen der Komponenten.

8. Verwendung von Zitronensäure zur Reduktion des Eigengeruches von Formteilen auf Basis von Polyamid-Formmassen sowie zur Reduktion der Eigengeruchsbildung bei der Behandlung von Formteilen auf Basis von Polyamid-Formmassen mit Feuchtigkeit.

9. Verwendung gemäß Anspruch 8, **dadurch gekennzeichnet, dass** es sich um eine Behandlung mit Feuchtigkeit handelt, wenn die Formteile mit Feuchtigkeit zur Verbesserung der mechanischen Eigenschaften in Kontakt kommen oder wenn die Formteile zur Anwendung in Kontakt mit Wasser enthaltenden Lebensmitteln oder Trinkwasser kommen.

10. Verwendung gemäß der Ansprüche 8 oder 9, **dadurch gekennzeichnet, dass** in den Formmassen auf A) 50 bis 99,999 Gew.-% Polyamid B) 0,001 bis 10 Gew.-%, bevorzugt 0,01 bis 5 Gew.-%, besonders bevorzugt 0,1 bis 3 Gew.-% Zitronensäure bezogen auf das Gewicht der Gesamtformmasse eingesetzt werden.

11. Verwendung gemäß der Ansprüche 8 bis 10, **dadurch gekennzeichnet, dass** die Formmassen in Extrusions-, Profil-Extrusions- oder Blasformverfahren oder im Spritzguss zur Herstellung von Folien, Profilen oder Formteilen zum Einsatz kommen.

12. Verwendung gemäß Anspruch 11, **dadurch gekennzeichnet, dass** als Blasformverfahren das Extrusionsblasformen, das 3D-Extrusionsblasformen, das Saugblasformverfahren und die sequentielle Coextrusion durchgeführt werden.

13. Verwendung gemäß der Ansprüche 8 bis 12, **dadurch gekennzeichnet, dass** es sich um Formteile für die Kraftfahrzeug-, Elektro-, Elektronik-, Telekommunikations-, für die Computerindustrie, für den Sport, für die Medizin, für den Haushalt, für die Bau- oder für die Unterhaltungsindustrie handelt.

## Claims

1. Process for reducing the intrinsic odour of mouldings made of polyamide moulding compositions by using citric acid, by addition to the moulding composition or by exterior effect on the moulding.

2. Process according to Claim 1, **characterized in that**, for the exterior effect, solutions of citric acid in water are prepared at a strength of from 0.001 to 20% by weight, preferably from 0.01 to 10% by weight, particularly preferably from 0.1 to 5% by weight, and these aqueous solutions of citric acid are brought into contact with the mouldings made of polyamide.

3. Process according to Claim 2, **characterized in that** the mouldings are immersed in the citric acid solution, or this is used to spray, coat, or otherwise wet the mouldings.

4. Process according to Claim 3, **characterized in that** the spraying, the coating or the wetting is carried out at temperatures of from 0 to 210°C, preferably from 10 to 100°C, particularly preferably from 15 to 60°C.

5. Process according to Claim 4, **characterized in that** the time during which the citric acid solution is permitted to act on the mouldings is from 1 second to 14 days, preferably from 1 minute to 7 days, particularly preferably from 1 hour to 28 hours.

6. Process according to Claims 2 to 5, **characterized in that**, for the conditioning process, the mouldings wetted with citric acid solution for the purposes of exterior effect are enclosed in a moisture-proof casing, preferably in a moisture-proof casing made of polyethylene foil.

7. Process according to Claim 1, **characterized in that** the citric acid is mixed with the other components in the corresponding proportions by weight, preferably via mixing of the citric acid with the other components at temperatures of from 220 to 330°C by mixing, kneading, extruding or rolling of the components together.

8. Use of citric acid for reducing the intrinsic odour of mouldings based on polyamide moulding compositions, or else for reducing the formation of intrinsic odour during the treatment of mouldings based on polyamide moulding compositions with moisture.

9. Use according to Claim 8, **characterized in that** a treatment with moisture is involved when the mouldings come into contact with moisture for improving mechanical properties, or when the mouldings are used in contact with water-containing foods or water-containing drinks or drinking water.

10. Use according to Claim 8 or 9, **characterized in that**, based on the weight of the entire moulding composition, for A) from 50 to 99.999% by weight polyamide B) from 0.001 to 10% by weight, preferably from 0.01 to 5% by weight, particularly preferably from 0.1 to 3% by weight, of citric acid are used in the moulding compositions.

11. Use according to Claims 8 to 10, **characterized in that** the moulding compositions are used in profile extrusion or other extrusion processes or blow-moulding processes or in the injection-moulding process for the production of foils, profiles or mouldings.

12. Use according to Claim 11, **characterized in that** the blow-moulding process carried out comprises 3D and other extrusion blow moulding, the suction blow moulding process and sequential coextrusion.

13. Use according to Claims 8 to 12, **characterized in that** mouldings are involved that are intended for the motor vehicle industry, electrical industry, electronics industry, telecommunications industry, for the computer industry, for sports, for medicine, for households, for the construction industry or for the entertainment industry.

## Revendications

1. Procédé pour la réduction de l'odeur propre de pièces moulées à base de matières à mouler polyamide, à l'aide d'acide citrique, par addition à la matière à mouler ou par action extérieure sur la pièce moulée.

2. Procédé selon la revendication 1, **caractérisé en ce que** dans l'action extérieure on prépare des solutions à 0,001 à 20 % en poids, de préférence à 0,01 à 10 % en poids, de façon particulièrement préférée à 0,1 à 5 % en poids d'acide citrique dans de l'eau et on met de telles solutions aqueuses de l'acide citrique en contact avec les pièces moulées à base de polyamide.

3. Procédé selon la revendication 2, **caractérisé en ce qu'**on immerge les pièces moulées dans la solution d'acide citrique, on pulvérise cette solution sur celles-ci, on les enduit avec cette solution ou on les mouille avec celle-ci d'une autre façon.

4. Procédé selon la revendication 3, **caractérisé en ce qu'**on effectue la pulvérisation, l'enduction ou le mouillage à des températures comprises entre 0 et 210 °C, de préférence entre 10 et 100 °C, de façon particulièrement préférée entre 15 et 60 °C.

5. Procédé selon la revendication 4, **caractérisé en ce qu'**on laisse agir sur les pièces moulées la solution d'acide citrique pendant entre 1 secondes et 14 jours, de préférence entre 1 minute et 7 jours, de façon particulièrement préférée entre 1 heure et 28 heures.

6. Procédé selon les revendications 2 à 5, **caractérisé en ce que** pour le conditionnement on enferme les pièces moulées, mouillées avec la solution d'acide citrique pour l'action extérieure, dans une enveloppe perméable à l'humidité, de préférence dans une enveloppe perméable à l'humidité à base de film en polyéthylène.

7. Procédé selon la revendication 1, **caractérisé en ce qu'**on mélange l'acide citrique avec les autres composants en les proportions en poids correspondantes, de préférence par mélange de l'acide citrique avec les autres composants à des températures de 220 à 330 °C, par addition conjointe, mélange, malaxage, extrusion ou passage entre des cylindres des composants.

8. Utilisation d'acide citrique pour la réduction de l'odeur propre de pièces moulées à base de matières à mouler polyamide ainsi que pour la réduction du dégagement d'odeurs propres lors du traitement de pièces moulées à base de matières à mouler polyamide par l'humidité.

9. Utilisation selon la revendication 8, **caractérisée en ce qu'**il s'agit d'un traitement par l'humidité, lorsque les pièces moulées entrent en contact avec de l'humidité pour l'amélioration des propriétés mécaniques ou lorsque les pièces moulées viennent à être utilisées en contact avec de l'eau de boisson ou des produits alimentaires contenant de l'eau.

10. Utilisation selon la revendication 8 ou 9, **caractérisée en ce qu'**on utilise dans les pièces moulées pour A) 50 à 99,999 % en poids de polyamide B) 0,001 à 10 % en poids, de préférence 0,01 à 5 % en poids, de façon particulièrement préférée 0,1 à 3 % en poids d'acide citrique, par rapport au poids de la matière à mouler totale.

11. Utilisation selon les revendications 8 à 10, **caractérisée en ce que** les matières à mouler sont utilisées dans des procédés d'extrusion, d'extrusion de profilés ou de moulage par soufflage ou dans le moulage par injection pour la fabrication de films, de profilés ou de pièces moulées.

12. Utilisation selon la revendication 11, **caractérisée en ce qu'**en tant que procédé de moulage par soufflage on utilise le moulage par soufflage-extrusion, le moulage par soufflage-extrusion 3D, le procédé de moulage par soufflage avec aspiration et la coextrusion séquentielle.

13. Utilisation selon les revendications 8 à 12, **caractérisée en ce qu'**il s'agit de pièces moulées pour l'industrie de l'automabile, de l'électronique, de l'électrotechnique, des télécommunications, pour l'industrie de l'informatique, pour le sport, pour la médecine, pour la maison, pour l'industrie du bâtiment ou pour l'industrie du divertissement.
